# EUROPEAN PATENT SPECIFICATION

(11) **EP 3 832 818 B1**
(45) Date of publication and mention of the grant of the patent: **12.02.2025**
(21) Application number: 19844890.4
(22) Date of filing: 22.04.2019
(51) Int. Cl.: H02B 1/28, H02B 1/38

(54) **SWITCHGEAR**
SCHALTANLAGE
APPAREILLAGE DE COMMUTATION

(30) Priority: 31.07.2018 JP 2018143549
(43) Date of publication of application: 09.06.2021
(73) Proprietor: HITACHI INDUSTRIAL EQUIPMENT SYSTEMS CO., LTD., Chiyoda-ku Tokyo 101-0022 (JP)
(72) Inventor: IWADATE Tomoya, Tokyo 101-0022 (JP); HONMA Masahiro, Tokyo 101-0022 (JP); WATANABE Naoya, Tokyo 101-0022 (JP); SAWADA Masashi, Tokyo 101-0022 (JP); KIYAMA Kazuharu, Tokyo 101-0022 (JP); PANG Jun Hoe, Tokyo 101-0022 (JP); KATOU Takashi, Tokyo 101-0022 (JP); MAKIYAMA Fumio, Tokyo 101-0022 (JP)
(74) Representative: MERH-IP Matias Erny Reichl Hoffmann Patentanwälte PartG mbB
(86) International application number: PCT/JP2019/016966
(87) International publication number: WO 2020/026541

(56) References cited:
- EP-A1- 0 848 468
- WO-A2-2004/101364
- DE-C1- 19 811 744
- DE-T2- 69 831 833
- FR-A1- 2 581 825
- JP-A- 2016 152 250
- JP-A- 2017 059 664
- JP-A- H1 046 896
- JP-A- S5 795 106
- JP-A- S61 116 914
- JP-A- S61 116 914
- JP-B1- 6 269 880
- JP-B1- 6 269 880
- JP-U- H0 557 881
- JP-Y1- S 353 839
- US-A- 2 522 964
- US-A- 5 435 641

## Description

### Technical Field

The present invention relates to a switchgear, and more particularly, to a metal-enclosed switchgear which requires pressure-resistant performance.

### Background Art

A metal-enclosed switchgear, in which high-voltage equipment such as a switch is accommodated in a metal closed box, is widely used in facilities with large electric equipment capacity such as a power station, a substation, an iron mill, and a petrochemical plant.

The metal-enclosed switchgears are roughly classified into three types of switchgears: a metal clad type switchgear in which the inner space is separated into multiple compartments (storage space) with a metal partition board; a compartment type switchgear in which the inner space is separated into multiple compartments with a non-metal (insulating) partition board; and a cubicle type switchgear other than those switchgears.

In these metal-enclosed switchgears, when a short circuit accident (arc accident) or the like occurs to the inner high-voltage equipment, there is a possibility that a high-temperature and high-pressure gas (hot gas) explosively occurs, and is discharged from a gap between the housing and the door of the switchgear to the outside, to influence other equipment installed around the switchgear and a worker. Accordingly, a safety measure to reliably prevent the influence of the high-temperature and high-pressure gas (hot gas) on the outside is needed.

For example, with regard to an object to increase sealability of the housing, a technique as in Patent Literature 1 is known.

Patent Literature 1 discloses an "electronic control device in which a connector-mounted circuit board is stored in the inner space of a housing, and the inner space is made waterproof space with a sealing material". Furthermore, PTL 2 discloses a casing for a power conversion device including a box-shaped casing body portion having an opening portion on the front surface side. PTL 3 discloses a switchgear, wherein a closing edge having an initial section, an intermediate section and an end section is substantially Z-shaped, wherein a magnetically conductive HF sealing element is applied to the inside of the door in the region of the end section of the closing edge. PTL 4 discloses a metal-enclosed switchgear, wherein a flange of a front panel is formed by a compressed groove on which a seal is applied, wherein said groove is connected to the panel, and wherein a recessed surface is provided with openings arranged uniformly in series for the attachment of supports or accessories. PTL 5 discloses another switch gear, wherein edges of the door for engaging with a sealing strip have an inwardly angled sealing edge at an angle of about 45°. PTL 6 also discloses a switch gear having a box-like cabinet body, wherein an edge of a door is set back so far against the cabinet body that a door frame forms an accessible receptacle which is open at the front so that a cover strip is inserted into the slot-like receptacle. Furthermore, PTL 7 discloses a rectangular receptacle comprising clamp bolts extending through a yoke and a notch in a flange of a cover, wherein each bolt having its head positioned between side arms of the yoke and a nut screwed on to the upper end of each bolt for drawing said flanges and said yokes together and forcing the gasket to be impressed upon the edges of the body. PTL 8 discloses an enclosure, which is externally hinged and has a positive internal locking mechanism/arrangement to ensure uniform sealing all around, between body and cover. PTL 9 discloses yet another casing, wherein a door or an extension has on the inside on its frame a profile forming a concave groove, wherein said groove is adapted to receive and to hold a seal. PTL 10 also discloses a cabinet for electrical equipment. Eventually, PTL 11 describes an improved structure for an electrical equipment storage box designed to prevent water accumulation and ensure dust and water resistance. The box features a main body with an opening and a door equipped with inner and outer gaskets. These gaskets, along with a rib on the door and a partition wall, enhance sealing performance and prevent water ingress. The design includes sloped surfaces to direct water away and a protective overhang to shield against rain and UV light, making it suitable for outdoor use.

### Citation List

### Patent Literature

PTL 1: Japanese Patent Application Laid-Open No. 2014-170669
PTL 2: JP 6 269 880 B1
PTL 3: DE 198 117 44 C1
PTL 4: DE 698 318 33 T
PTL 5: EP 0 848 468 A1
PTL 6: JP S61 116 914 A
PTL 7: US 2 522 964 A
PTL 8: WO 2004/101 364 A2
PTL 9: FR 2 581 825 A1
PTL 10: US 5 435 641 A
PTL 11: JP 2017 059 664 A

### Summary of Invention

### Technical Problem

As described above, in the metal-enclosed switchgear, a device structure to prevent the influence on the outside due to the high-temperature and high-pressure gas (hot gas) upon occurrence of a short circuit accident (arc accident) is considered. Especially, prevention of the discharge of the high-temperature and high-pressure gas (hot gas) from the gap between the housing and the door of the switchgear is a significant object to protect the peripheral equipment and ensure safety for the worker.

The above-described Patent Literature 1 is for a comparatively small electronic control device. When the structure of the sealing material and the groove described in Patent Literature 1 is to be applied to the door of the switchgear, as the contact area between the members such as the housing and the door and the sealing member is increased, a large force is required when closing the door.

On the other hand, the switchgear accommodates high-voltage equipment such as a switch inside, and periodical maintenance and inspection are required. Accordingly, an easily-openable/closable door structure is desired.

Accordingly, the purpose of the present invention is to provide a door seal structure (packing structure), with high sealing performance, which enables opening/closing of the door with ease, in a metal-enclosed switchgear. Solution to Problem

The present invention is set out in the appended set of claims. Preferred embodiments of the present invention are described in the dependent claims.

### Advantageous Effects of Invention

According to the present invention, in the metal-enclosed switchgear, it is possible to realize a door seal structure (packing structure), with high sealing performance, which enables closing of the door with ease.

With this configuration, in a metal-enclosed switchgear, even when a heated and expanded high-temperature and high-pressure gas (hot gas) occurs inside due to an arc accident or the like, it is possible to reliably prevent discharge of the high-temperature and high-pressure gas (hot gas) from between the housing and the door to the outside. Furthermore, it is possible to provide a switchgear which is excellent in reliability and workability, and which enables closing of the door with ease.

Other objects, the features and advantages of the present invention than those described above may be clearer with the following detailed description.

### Brief Description of Drawings

Figure 1 is a perspective view showing an outline of a housing and a door of a switchgear according to Example 1 to which the present invention is applied.
Figure 2 is a view showing a state where the door in Figure 1 is open.
Figure 3 is an enlarged view showing a cross section of a part A in Figure 1, which is not encompassed by the wording of the claims but is considered as useful for understanding the invention.
Figure 4 is an enlarged view showing the cross section of the part A in Figure 1, which is not encompassed by the wording of the claims but is considered as useful for understanding the invention.
Figure 5 is a view showing a modification of Figure 4, which is not encompassed by the wording of the claims but is considered as useful for understanding the invention.
Figure 6 is a view showing another modification of Figure 4.
Figure 7 is a view showing a bolt structure (door lock mechanism) of the switchgear according to Example 2 to which the present invention is applied.
Figure 8 is a view showing a state where the bolt structure (door lock mechanism) in Figure 7 is locked.
Figure 9 is an enlarged view showing the details of a B-B cross section in Figure 7, which is not encompassed by the wording of the claims but is considered as useful for understanding the invention.
Figure 10 is an enlarged view showing the details of the B-B cross section in Figure 8, which is not encompassed by the wording of the claims but is considered as useful for understanding the invention.
Figure 11 is a view showing a modification of Figure 7.
Figure 12 is a view showing a modification of Figure 8.
Figure 13 is a perspective view showing an outline of the housing and the door of the switchgear according to Example 3 to which the present invention is applied.
Figure 14 is a view showing a state where the door in Figure 13 is closed.
Figure 15 is an enlarged view showing a cross section of a part C in Figure 14, which is not encompassed by the wording of the claims but is considered as useful for understanding the invention.
Figure 16 is an enlarged view showing the cross section of the part C in Figure 14, which is not encompassed by the wording of the claims but is considered as useful for understanding the invention.

### Description of Embodiments

Hereinbelow, examples to which the present invention is applied will be described with reference to the drawings. Note that in the respective drawings, the same constituent elements will have the same reference numerals, and detailed description of overlapped parts will be omitted.

### <Example 1>

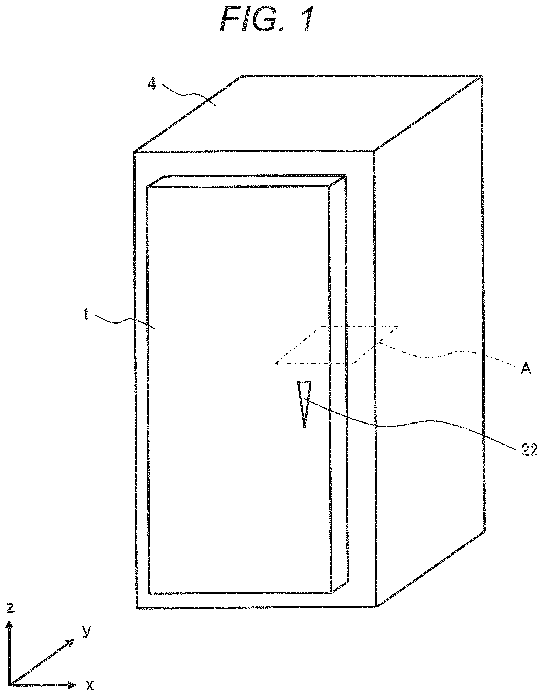

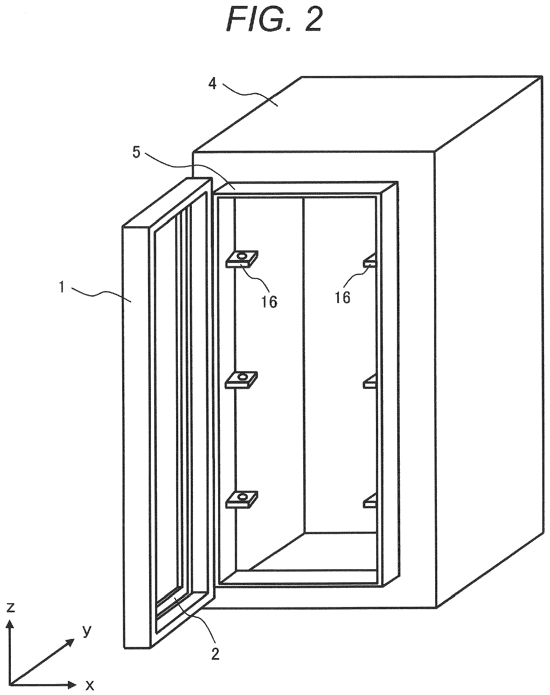

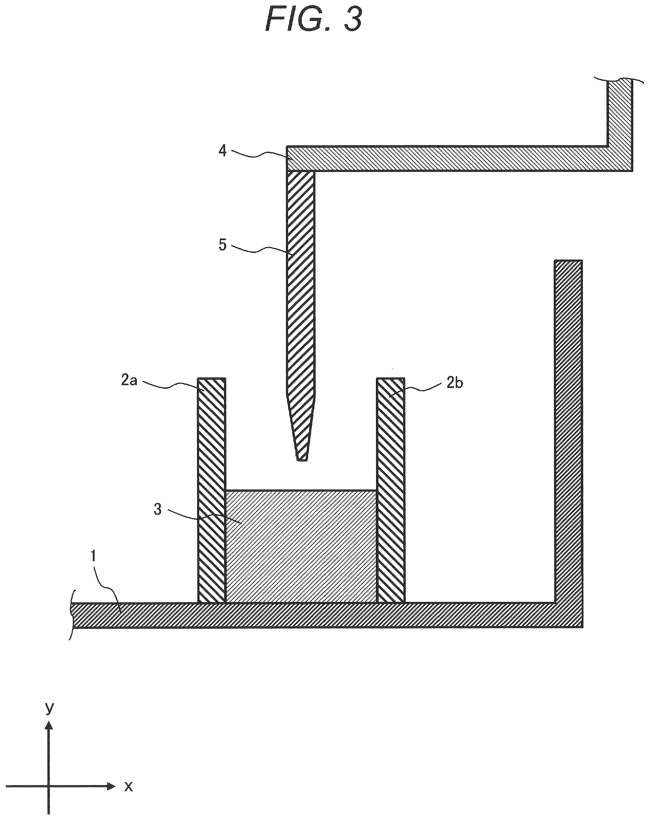

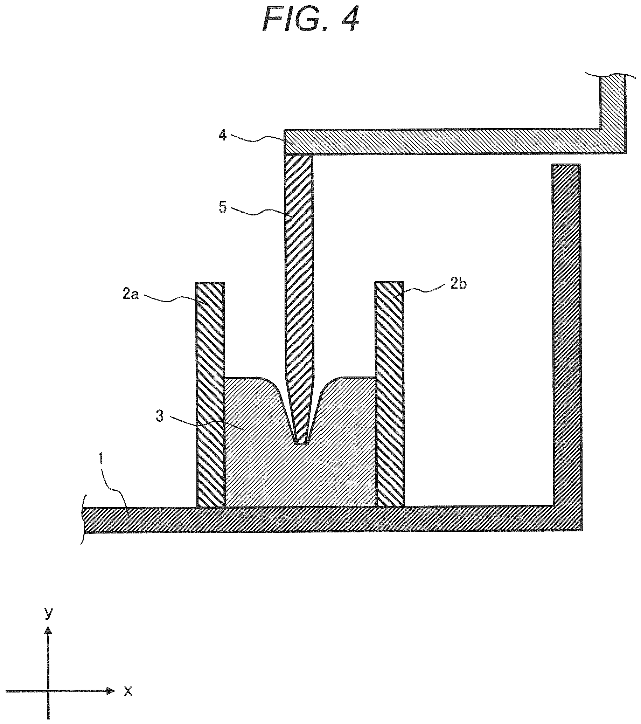

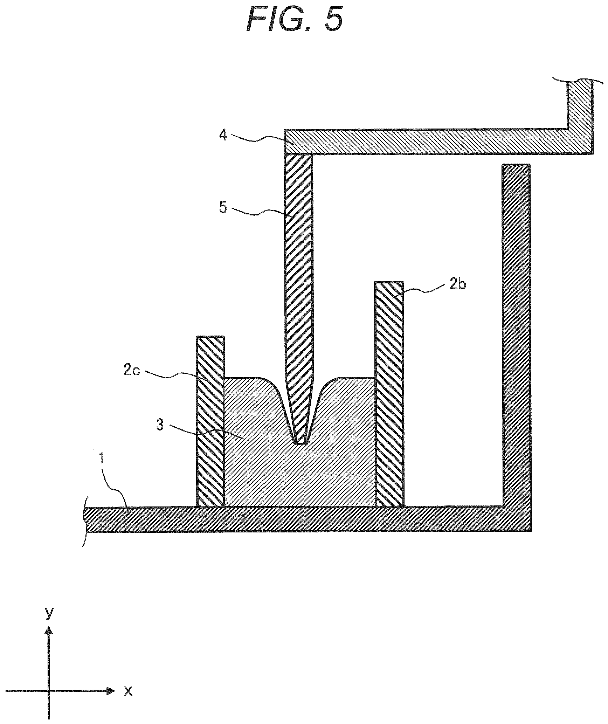

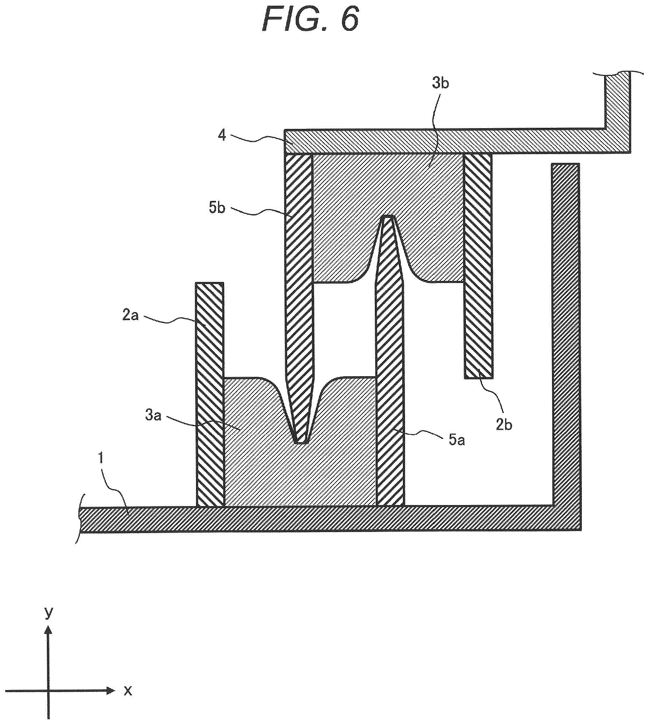

With reference to Figure 1 to Figure 6, a switchgear according to Example 1 will be described. Figure 1 is a perspective view showing an appearance of a housing of the switchgear according to the present example. Figure 2 shows a state where a door 1 of the switchgear is open. Figure 3 to Figure 6 are enlarged views showing a cross section of a part A in Figure 1. Figure 3 shows a state where the door 1 is open (strictly, a state immediately before closing of the door 1). Figure 4 shows a state where the door 1 is closed. Figure 5 and Figure 6 are modifications of Figure 4 respectively.

Note that although not shown in Figure 2, the present invention is also applicable to a metal clad type switchgear in which the inner space of the housing 4 is separated into multiple compartments (storage space) with a metal partition board, a compartment type switchgear in which the inner space is separated into multiple compartments with a non-metal (insulating) partition board, or a cubicle type switchgear other than those switchgears.

Further, in the respective drawings, X, Y, and Z axes are shown to clarify the arrangement (relationship) of the configuration in the respective drawings. The axes respectively correspond to the width direction (X axis), the depth direction (Y axis), and the height direction (Z axis) of the switchgear.

As shown in Figure 1, the switchgear according to the present example is a metal closed box, i.e., a so-called metal-enclosed switchgear, in which the door 1 having a handle 22 is installed openably/closably with respect to the housing 4. To secure strength, steel material such as iron or stainless steel (SUS material) is mainly used as the door 1 and the housing 4. Note that generally, a current of about 2000 A flows through the various high-voltage equipment installed in the switchgear, and accordingly, it is desirable to use stainless steel (SUS material) in a part where the problem of influence of over current may occur.

The handle 22 is connected to a bolt structure (door lock mechanism) as described later. The handle 22 is a handle upon opening/closing of the door 1, and upon closing the door 1, becomes a part of the door lock mechanism to fix the door 1 to the housing 4. The door 1 is installed, openably/closably (rotatably) with respect to the housing 4, with unshown multiple hinge joints (hinges). Note that to secure equipment installation space in the switchgear, it is desirable that the door 1 is an outward-opening door as shown in Figure 2.

As shown in Figure 2, a plate 2 to limit misalignment of a sealing material is provided inside of the door 1. A plate 5 having a wedge-shaped cross section is provided on the door side (a joint part with respect to the door 1 when the door is closed) of the housing 4. Further, multiple perforated plates 16 on the housing side, through which a bolt (door lock member) to be described later is inserted, are provided at an opening (inside of the wedge-shaped plate 5) of the housing 4.

Note that in Figure 2, the wedge-shaped plate 5 is shown as a frame-shaped member provided around the opening (the joint part with respect to the door 1 when the door is closed) of the housing 4 to surround the opening and to be projected from the housing 4. For example, the wedge-shaped plate 5 may be configured with four plate-shaped members, respectively extended in a horizontal direction (x direction) or a vertical direction (z direction) with respect to an installation surface (floor surface) of the housing 4 in one side of the opening of the housing 4, and projected from the housing 4.

Further, as described later, it is preferable that the wedge-shaped plate 5 has a wedge-shaped cross-sectional shape so as to press the sealing material with a comparatively small force when closing the door 1, and furthermore, so as to secure sealability of the switchgear. As long as it is possible to secure the seal pressing force and sealability, the cross-sectional shape is not necessarily limited to the wedge shape. That is, it is possible to paraphrase the wedge-shaped plate 5 into a sealing material pressing member, a frame-shaped member to press the sealing material, a plate-shaped member to press the sealing material, or the like.

Next, the door seal structure (packing structure) according to the present example will be described in detail by using Figure 3 and Figure 4. Figure 3 is an enlarged view of the seal structure (packing structure) in a state where the door 1 is open (strictly, a state immediately before closing of the door 1). Figure 4 is an enlarged view of the seal structure (packing structure) in a state where the door 1 is closed.

As shown in Figure 3, two plates 2a and 2b to limit misalignment of the sealing material 3 are provided inside of the door 1 of the switchgear. The two plates 2a and 2b form a groove between them. The two plates 2a and 2b are two plate-shaped members vertically fixed with respect to the door 1 in one side of the door 1. The sealing material 3 is fitted and fixed in the groove between the two plates 2a and 2b. That is, the two plates 2a and 2b are support members to support-fix the sealing material 3 on the door 1. On the other hand, the plate 5 with a wedge-shaped cross-sectional end is provided on the door side (the joint part with respect to the door 1 when the door is closed) of the housing 4 of the switchgear.

As shown in Figure 4, by closing the door 1, the wedge-shaped plate 5 is pressed against the sealing material 3 and caused to bite into the sealing material 3. That is, the wedge-shaped plate 5 is a pressing member to press the sealing material 3. The movement of the sealing material 3 is limited with the two plates 2a and 2b. For example, even when a high pressure to cause heated and expanded high-temperature and high-pressure gas (hot gas) inside of the switchgear has acted, it is possible to maintain the sealing without misalignment of the sealing material 3.

By forming the plate 5, provided on the housing 4 side, in a wedge shape, the area in contact with the sealing material 3 is small, and a high surface pressure acts on the sealing material 3. It is possible, even with a small force, to effectively prevent leakage of high pressure (high-pressure gas) occurred inside of the switchgear to the outside.

Note that it is desirable that, to reliably prevent leakage of the high-temperature and high-pressure gas (hot gas) to the outside even when the door 1 is somewhat misaligned in the opening direction due to increase of the inner pressure of the switchgear, the amount of biting of the wedge-shaped plate 5 into the sealing material 3 when the door 1 is closed is larger than the amount of misalignment of the door 1 due to increase of inner pressure of the switchgear.

Further, by setting the depth of the groove formed with the two plates 2a and 2b (the depth in the y direction between 2a and 2b in Figure 4) to be longer than the width of the groove formed with the two plates 2a and 2b (the width in the x direction between 2a, 2b in Figure 4), the high-temperature and high-pressure gas (hot gas) which occurs in the switchgear hardly enters in the groove, and it is possible to reduce the possibility of the contact between the high-temperature and high-pressure gas (hot gas) and the sealing material 3.

To secure a fixed amount of biting of the wedge-shaped plate 5 into the sealing material 3, it is desirable to use an elastic material as the sealing material 3. As an elastic material, for example, an organic material such as natural rubber, synthetic rubber such as nitrile rubber, silicone rubber, acrylic rubber, styrene-butadiene rubber, fluorine rubber, ethylenepropylene rubber, or tetrafluoroethylene rubber resin, can be given. Considering the possibility of the contact with the high-temperature and high-pressure gas (hot gas) which occurs in the switchgear, it is more preferable to select and use a flame retardant material.

Further, a non-organic material having elasticity to secure a fixed amount of biting of the wedge-shaped plate 5 into the sealing material 3 may be used as long as it prevents leakage of the high-temperature and high-pressure gas (hot gas) to the outside.

Note that, in Figure 2, the wedge-shaped plate 5 having a shape to cover (surround) the entire circumference of the door opening is shown. It may be configured such that the wedge-shaped plate 5 is e.g. a wedge-shaped member, and multiple wedge-shaped members are scattered, in a dotted line, so as to surround the door opening. The shape viewed from the front side of the switchgear may be line shape or dotted line shape as long as it is a shape to bite into the material 3 in the respective cross sections as shown in Figure 3 to Figure 5.

As described above, according to the present example, by inserting the packing (sealing material 3) into the outer periphery of the door 1, and cause the edge of the housing 4 (wedge-shaped plate 5) to bite into the packing (sealing material 3), the leakage of gas or the like occurred in the housing 4 is prevented. The door 1 is somewhat misaligned upon increase of the inner pressure of the housing 4; however, since the amount of biting of the edge of the housing 4 (wedge-shaped plate 5) into the packing (sealing material 3) is larger than the amount of misalignment, no gap occurs between the door 1 and the housing 4, and the leakage of gas or the like does not occur. Further, the misalignment of the packing (sealing material 3) due to pressure is prevented by holding the packing (sealing material 3) between the two plates 2a and 2b.

Further, by forming the housing 4 to have a wedge-shaped (sharp) edge to reduce the contact area with respect to the packing (sealing material 3), the structure to increase the surface pressure for sufficient biting with a small force is given. With this configuration, upon closing of the door 1, a large force is not required, and it is possible to easily and reliably prevent the leakage of gas or the like occurred inside of the housing 4.

Figure 5 and Figure 6 are modifications of the seal structure (packing structure) in Figure 4.

By configuring such that, in the two plates 2a and 2b provided on the door 1, the plate 2a on the hinge joint (hinge) side is shorter than the plate 2b, as in the case of a plate 2c in Figure 5, it is possible to avoid the possibility of contact (interference) between the plate 2a (2c) and wedge-shaped plate 5 upon opening/closing of the door 1.

Further, as shown in Figure 6, it may be configured such that a plate to limit the misalignment of a sealing material, the sealing material, and a wedge-shaped plate, are provided on both door 1 side and housing 4 side, as a double seal structure (packing structure).

In the example of Figure 6, one plate 2a and a plate 5a with a wedge-shaped end are provided on the door 1, and a sealing material 3a is fitted and fixed in the groove formed between these plates. On the other hand, a similar structure (one plate 2b, a plate 5b with a wedge-shaped end, and a sealing material 3b) is provided on the housing 4 oppositely, and the respective wedge-shaped plates 5a and 5b are pressed against the sealing materials 3a and 3b, to seal the switchgear. In this case, as the number of the sealing materials (3a and 3b) is large, it is possible to further improve the pressure resistance.

Note that in the above description, the structure where the plates 2a and 2b (or 2c) to limit the misalignment of the sealing material and the sealing material 3 are provided on the door 1 side, and the wedge-shaped plate 5 to bite into the sealing material 3 (press the sealing material 3) is provided on the housing 4 side, has been explained. On the contrary, a structure where the plates 2a and 2b (or 2c) to limit the misalignment of the sealing material and the sealing material 3 are provided on the housing 4 side, and the wedge-shaped plate 5 to bite into the sealing material 3 is provided on the door 1 side, may be used.

### <Example 2>

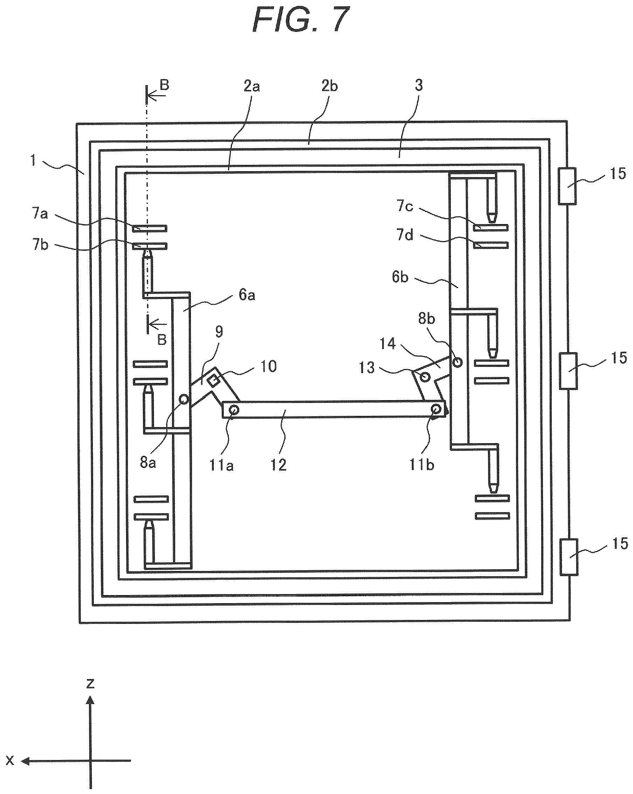

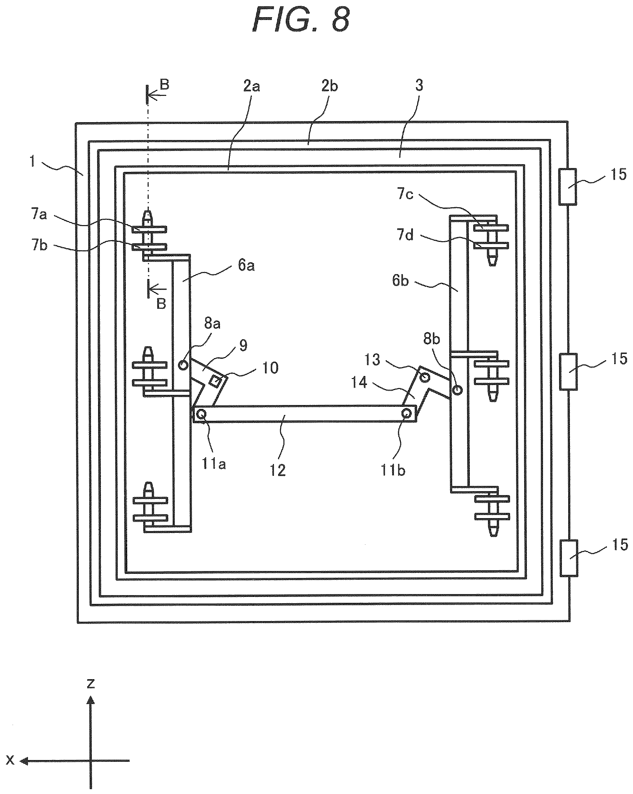

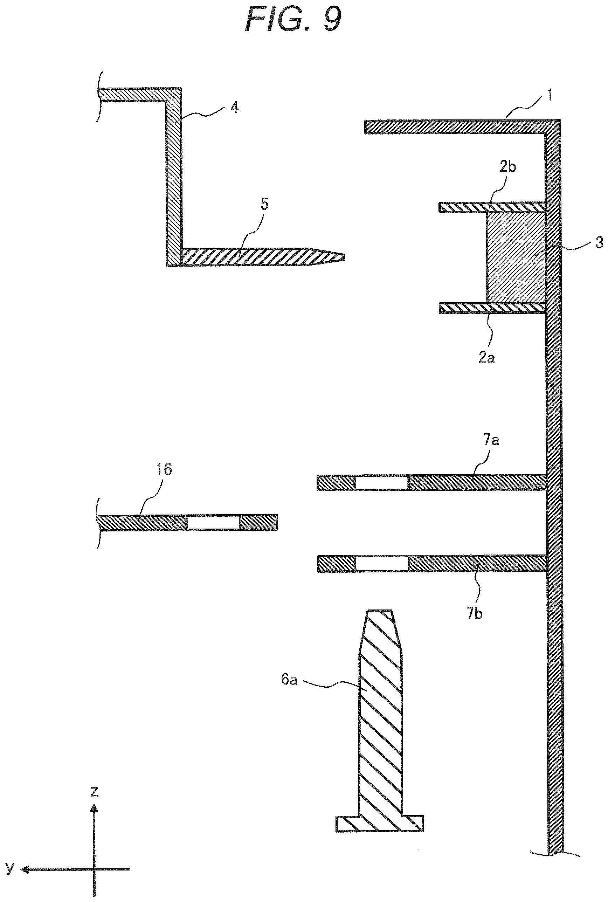

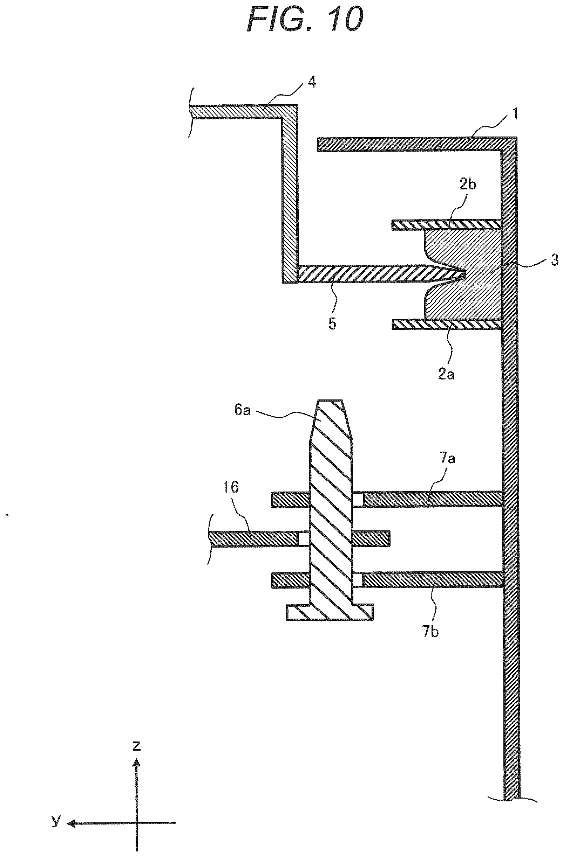

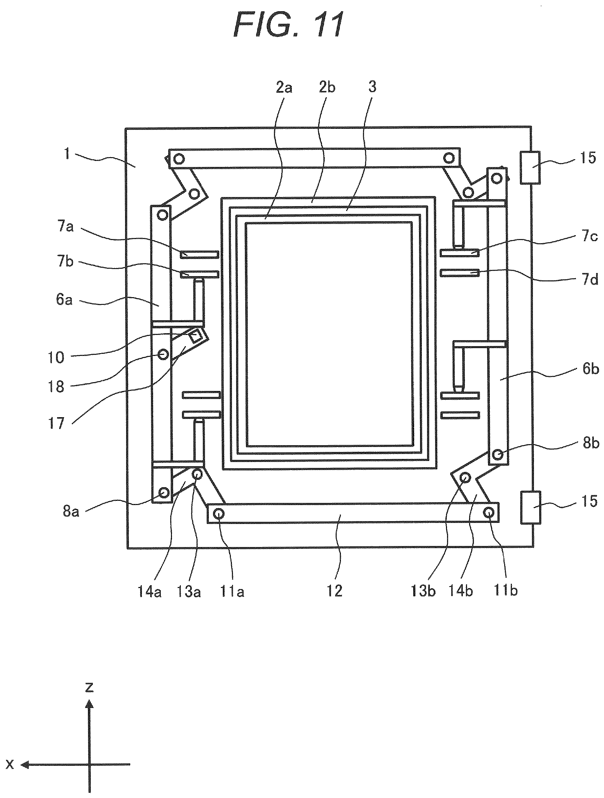

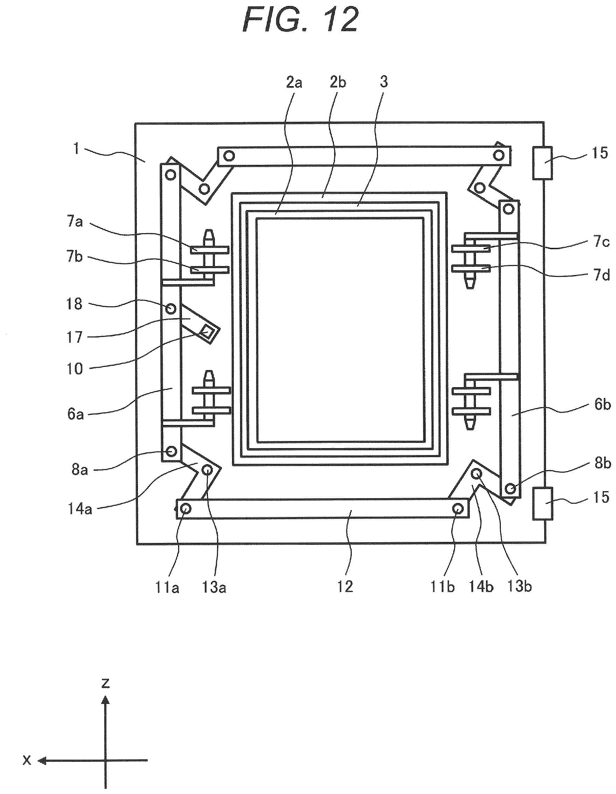

The switchgear according to Example 2 will be described with reference to Figure 7 to Figure 12. Figure 7 shows the bolt structure (door lock mechanism) of the switchgear according to the present example viewed from the inside of the door 1. Figure 8 shows a state where the door 1 is locked (fixed) to the housing with the bolt structure (door lock mechanism). Figure 9 and Figure 10 are enlarged views respectively showing the details of the B-B cross section in Figure 7 and Figure 8. Figure 11 and Figure 12 are modifications of Figure 7 and Figure 8 respectively.

In the present example, in addition to the seal structure (packing structure) according to Example 1, the bolt structure (door lock mechanism) as shown in Figure 7 is provided inside of the door 1 of the switchgear. The bolt structure (door lock mechanism) is provided inside of the door 1 (the housing 4 side) and further inside (the center side of the door 1) than the seal structure (the plates 2a and 2b and the sealing material 3) described in Example 1.

As shown in Figure 7, the bolt structure (door lock mechanism) is configured with two bolts 6a and 6b provided on both sides of the door 1, L-shaped metal fittings 9 and 14 respectively connected to the bolts 6a and 6b with pins 8a and 8b, a rod 12 connected to the L-shaped metal fittings 9 and 14 with pins 11a and 11b, and perforated plates 7a to 7d which are provided on the door 1 side and through which the bolts are inserted.

The L-shaped metal fitting 9 is connected via a handle shaft 10 to the handle 22 provided on the opposite side of the door 1. It is possible to operate the bolt structure (door lock mechanism) by operating the handle 22 to move the bolts 6a and 6b in the vertical direction in the drawing. The L-shaped metal fitting 14 is rotatably attached to the door 1 with a shaft 13, and is rotated about the shaft 13 as a rotation center in accordance with movement of the L-shaped metal fitting 9 and the rod 12 with the handle 22. The door 1 is connected to the unshown housing 4 with a hinge joint (hinge) 15.

As shown in Figure 9, in a state where the door 1 is open and the bolt structure (door lock mechanism) is not operated (a state where the door 1 is not fixed (locked) to the housing 4), the wedge-shaped plate 5 on the housing 4 side is away from the sealing material 3 on the door 1 side and the switchgear is not sealed. Further, the bolt 6a is not inserted through any of the hole of the perforated plate 16 on the housing 4 side and the holes of the perforated plates 7a and 7b on the door 1 side, and the door 1 is not fixed (locked) to the housing 4.

On the other hand, as shown in Figure 8 and Figure 10, in a state where the door 1 is closed and the bolt structure (door lock mechanism) is operated (a state where the door 1 is fixed (locked) to the housing 4), the wedge-shaped plate 5 on the housing 4 side bites into the sealing material 3 on the door 1 side, and the switchgear is in a sealed state. Further, the bolt 6a is inserted through the hole of the perforated plate 16 on the housing 4 side and the holes of the perforated plates 7a and 7b on the door 1 side, and the door 1 is fixed (locked), with respectively three left and right bolts, i.e. total six bolts, to the housing 4.

As in the present example, by providing the bolt structure (door lock mechanism), in addition to the seal structure (packing structure) according to Example 1, even when the door 1 has an outward-opening structure, as the door 1 is fixed (locked) to the housing 4 with the six bolts, it is possible to disperse and support the pressure of the high-temperature and high-pressure gas (hot gas) occurred in the switchgear, and to obtain sufficient pressure resistance.

Further, it is possible to reliably fix (lock) the door 1 to the housing 4 with a simple operation (with a small force) by connecting the bolt structure (door lock mechanism) to the handle 22.

Note that in the examples in Figure 7 and Figure 8, the door 1 is fixed to the housing 4 with six bolts; however, the number of bolts is not necessarily limited to this number. As long as it is possible to withstand the inner pressure of the switchgear, respectively one or two bolts may be provided on the left and right of the door 1. Further, since the door 1 is connected (fixed) to the housing 4 with the hinge joint (hinge) 15, as long as it is possible to secure the strength of the bolt, the bolt may be provided only on the handle 22 side (the left side in Figure 7 and Figure 8).

Figure 11 and Figure 12 are modifications of the bolt structure (door lock mechanism) in Figure 7 and Figure 8.

In Figure 7 and Figure 8, the bolt structure (door lock mechanism) is provided further inside (the center side of the door 1) than the seal structure (the plates 2a and 2b and the sealing material 3). On the other hand, in Figure 11 and Figure 12, the seal structure (the plates 2a and 2b and the sealing material 3) is provided further inside (the center side of the door 1) than the bolt structure (door lock mechanism). In other words, the bolt structure (door lock mechanism) is provided on the further outer peripheral side of the door 1 than the seal structure (the plates 2a and 2b and the sealing material 3) .

The bolt structure (door lock mechanism) shown in Figure 11 and Figure 12 is configured with the two bolts 6a and 6b provided on both sides of the door 1, L-shaped metal fittings 14a and 14b respectively connected to the bolts 6a and 6b with the pins 8a and 8b, the rod 12 connected to the L-shaped metal fittings 14a and 14b with pins 11a and 11b, and the perforated plates 7a to 7d which are provided on the door 1 side and through which the bolts are inserted.

The bolt 6a is connected, via the metal fitting 17 attached to the handle shaft, the pin 18 which connects the metal fitting 17 and the bolt 6a, and the handle shaft 10, to the handle 22 provided on the opposite side of the door 1. It is possible to operate the bolt structure (door lock mechanism) by operating the handle 22 to move the bolts 6a and 6b in the vertical direction in Figure 11 and Figure 12. In the examples in Figure 11 and Figure 12, in consideration of the bolt installation space on the door 1, respectively two bolts, i.e., total four bolts, are provided on the left and right sides of the door 1.

Note that in Figure 11 and Figure 12, the bolt structure (door lock mechanism) is configured in point-symmetry on the door 1, and overlapped explanations of constituent elements in symmetry will be omitted.

As shown in Figure 11 and Figure 12, by providing the seal structure (the plates 2a and 2b and the sealing material 3) further inside (the center side of the door 1) than the bolt structure (door lock mechanism), even when the high-temperature and high-pressure gas (hot gas) occurs inside of the switchgear, it is possible to prevent damage to the bolt structure (door lock mechanism) due to the impact of inner pressure rise in the switchgear.

### <Example 3>

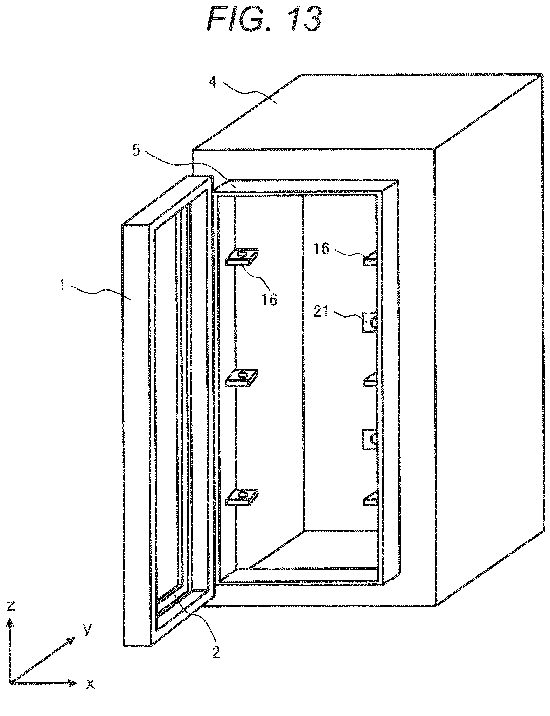

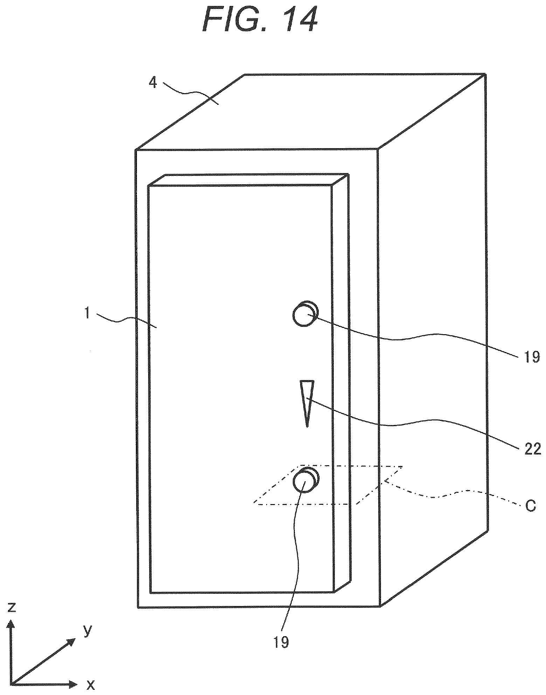

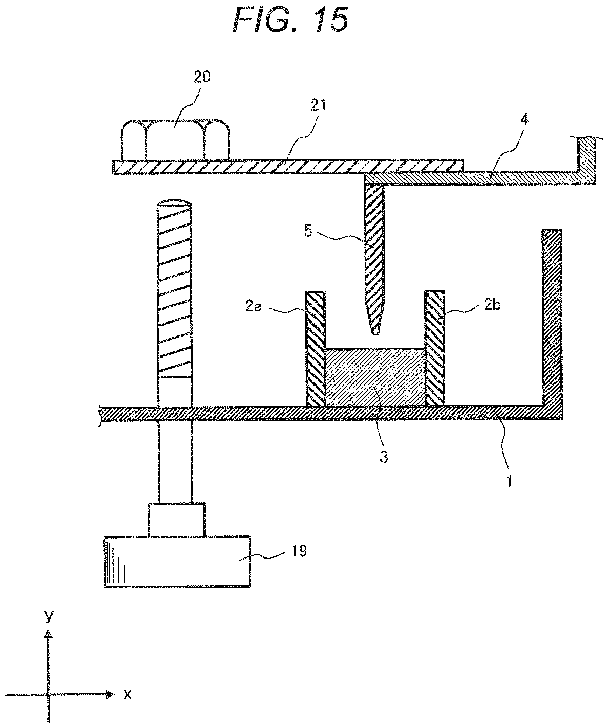

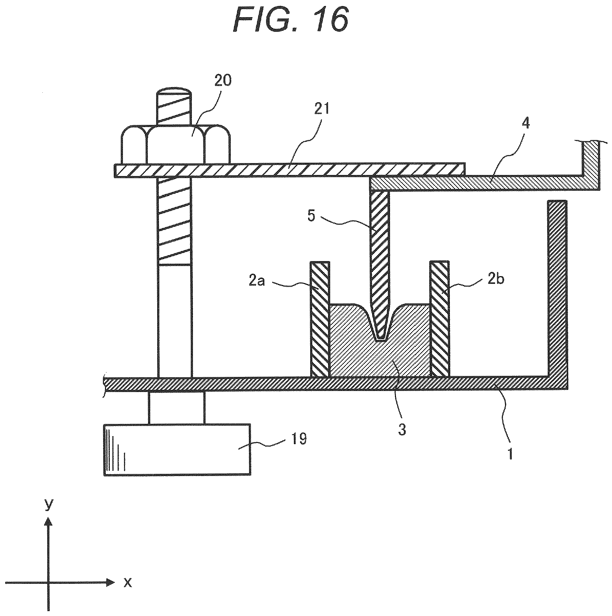

The switchgear according to Example 3 will be described with reference to Figure 13 to Figure 16. Figure 13 is a perspective view showing the outer appearance of the housing of the switchgear according to the present example. Figure 14 shows a state where the door 1 of the switchgear is closed. Figure 15 and Figure 16 are enlarged views showing a cross section of a part C in Figure 14. Figure 15 shows a state where the door 1 is open (strictly, a state immediately before closing of the door 1). Figure 16 shows a state where the door 1 is closed.

In the present example, in addition to the seal structure (packing structure) according to Example 1, a knob screw to fix the door 1 of the switchgear to the housing 4 is provided. The knob screw is provided further inside (the center side of the door 1) than the seal structure (the plates 2a and 2b and the sealing material 3) described in Example 1.

As shown in Figure 13, in the switchgear according to the present example, in addition to the constituent elements in Figure 2, multiple metal fittings 21 are provided on the door side of the housing 4 (a joint part with respect to the door 1 when the door is closed). As shown in Figure 14, the metal fitting 21 is a support member for a weld nut to fix the door 1 to the housing 4 with the knob screw 19 when the door 1 is closed.

The door seal structure (packing structure) and the door fixing structure according to the present example will be described in detail by using Figure 15 and Figure 16. Figure 15 is an enlarged view of the seal structure (packing structure) and the door fixing structure in a state where the door 1 is open (strictly, a state immediately before closing of the door 1). Figure 16 is an enlarged view of the seal structure (packing structure) and the fixing structure in a state where the door 1 is closed.

As shown in Figure 15, in a state where the door 1 is open and the door 1 is not fixed to the housing 4 with the door fixing structure (the knob screw 19, a weld nut 20, and the metal fitting 21), the wedge-shaped plate 5 on the housing 4 side is away from the sealing material 3 on the door 1 side, and the switchgear is not sealed.

On the other hand, as shown in Figure 16, in a state where the door 1 is closed and the door 1 is fixed to the housing 4 with the door fixing structure (the knob screw 19, the weld nut 20, and the metal fitting 21), the wedge-shaped plate 5 on the housing 4 side bites into the sealing material 3 on the door 1 side, and the switchgear is in a sealed state. Further, the door 1 is fixed to the housing 4 with the door fixing structure (the knob screw 19, the weld nut 20, and the metal fitting 21).

As in the present example, by providing the door fixing structure with the knob screw, in addition to the seal structure (packing structure) according to Example 1, even when the door 1 has an outward-opening structure, as the door 1 is reliably fixed to the housing 4, it is possible to obtain sufficient pressure resistance with respect to the high-temperature and high-pressure gas (hot gas) which occurs in the switchgear.

Further, as in Example 2, when both the seal structure (packing structure) and the bolt structure (door lock mechanism) are provided, when closing the door 1, in some cases, misalignment occurs between the position of the bolt insertion hole on the door side (for example, the holes of the perforated plates 7a and 7b in Figure 9) and the position of the bolt insertion hole on the housing side (for example, the hole of the perforated plate 16 in Figure 9) due to the repulsive force (elastic force) of the sealing material 3, and the bolt cannot be inserted well or friction occurs due to rubbing between the hole edge and the bolt. As in the present embodiment, by further providing the knob screw, it is possible to crush the sealing material with the knob screw upon closing of the door 1, and it is possible to align the positions of the bolt insertion hole on the door side and the bolt insertion hole on the housing side, and further it is possible to smoothly insert the bolt.

Note that by using the knob screw 19 as the door fixing structure, it is possible to manually fix the door 1 to the housing 4 without any tool; however, a bolt may be used in place of the knob screw 19. Further, in the example in Figure 13 and Figure 14, the door 1 is fixed to the housing 4 with two knob screws 19; however, the number of knob screws 19 is not necessarily limited to this number. As long as it is possible to withstand the inner pressure of the switchgear, one or three or more knob screws may be provided at least on the handle 22 side (the opposite side to the hinge 15 side) of the door 1.

Further, in the example in Figure 13 to Figure 16, the door fixing structure using the knob screw 19 is provided further inside (the center side of the door 1) than the seal structure (the plates 2a and 2b and the sealing material 3). As long as installation space is secured, the door fixing structure using the knob screw 19 may be provided further outside (the outer peripheral side of the door 1) than the seal structure (the plates 2a and 2b and the sealing material 3).

Further, as described above, the door fixing structure may be combined with the bolt structure (door lock mechanism) according to Example 2 in addition to the seal structure (packing structure) according to Example 1. As in the present example, a structure where the knob screw 19 to cause the edge of the housing 4 (the wedge-shaped plate 5) to sufficiently bite into the packing (sealing material 3) is attached, and when closing the door 1, the edge of the housing 4 (the wedge-shaped plate 5) is caused to bite, with the knob screw 19, into the packing (sealing material 3), then the bolt is inserted, may be used.

It is possible to strongly press the door 1 against the sealing material 3 with the knob screw, to reduce friction between the bolt holes (7a, 7b, and 16) and the bolt 6a, and to facilitate the handle operation.

Further, with the bolt structure (door lock mechanism) and the door fixing structure using the knob screw, it is possible to obtain higher pressure resistance with respect to high-temperature and high-pressure gas (hot gas) occurred in the switchgear.

According to the respective examples described above, in the metal-enclosed switchgear, it is possible to realize a door seal structure (packing structure) which has high sealing performance and which enables closing of a door with ease.

With this configuration, in the metal-enclosed switchgear, even when a heated and expanded high-temperature and high-pressure gas (hot gas) occurs in the inside due to arc accident or the like, it is possible to provide a switchgear, which is excellent in reliability and workability, and which reliably prevents discharge of the high-temperature and high-pressure gas (hot gas) from between the housing and the door to the outside, and further, which enables closing of the door with ease.

Note that the present invention is not limited to the above-described examples, but various modifications can be included, always within the scope of protection defined in the claims.

For example, the above-described examples have been described in detail for clearly explaining the present invention, and the invention is not necessarily limited to an example having all the explained constituent elements. Further, some of constituent elements of an example may be replaced with those of another example, and further, constituent elements of an example may be added to those of another example. Further, it is possible to perform addition/deletion/replacement with respect to some of the constituent elements of the respective examples with other constituent elements.

### Reference Signs List

1... door, 2, 2a, 3a, 2b, 2c... plate to limit misalignment of sealing material, 3, 3b... sealing material, 4... housing, 5, 5a, 5b... wedge-shaped plate, 6, 6a, 6b... bolt, 7, 7a, 7b, 7c, 7d... perforated plate on the door side which bolt is inserted through, 8a, 8b... pin to connect the bolt and L-shaped metal fitting, 9... L-shaped metal fitting (attached to handle shaft), 10... handle shaft, 11a, 11b... pin to connect L-shaped metal fitting and rod, 12... rod, 13... shaft to be rotation center for L-shaped metal fitting, 14, 14a, 14b... L-shaped metal fitting, 15... hinge joint (hinge), 16... perforated plate on the housing side which bolt is inserted through, 17... metal fitting attached to handle shaft, 18... pin to connect metal fitting 17 and bolt, 19... knob screw, 20... weld nut, 21... metal fitting attached to housing, and 22... handle.

## Claims

1. A switchgear comprising:
a housing (4) that accommodates equipment inside; and
an outward-opening door (1) that is openably/closably provided on the housing (4) with a hinge (15),
wherein a structure comprising one plate (2a) and a plate (5a) having a wedge-shaped end is provided on the door (1), and a sealing material (3a) of an elastic body is fitted and fixed in the groove formed between these plates,
wherein a similar structure comprising one plate (2b), a plate (5b) having a wedge-shaped end, and a sealing material (3b) of an elastic body fitted and fixed therebetween is provided on the housing (4) oppositely to the structure of the door (1),
**characterized in that**:
when the door (1) is closed, the respective wedge-shaped plates (5a) and (5b) are pressed against the sealing materials (3a) and (3b) to seal the switchgear.

2. The switchgear according to claim 1,
wherein the length of the first plate-shaped member (2a) on the hinge side is shorter than the length of the second plate-shaped member (5a).

3. The switchgear according to claim 1, further comprising:
a bolt (6, 6a, 6b) that is provided inside of the door (1), and on the further center side of the door (1) than the sealing material (3, 3b); and a handle (22) that is provided outside of the door (1), and that is connected to the bolt (6, 6a, 6b),
wherein the bolt (6, 6a, 6b) is operated to fix the door (1) to the housing (4) by operating the handle (22).

4. The switchgear according to claim 3,
wherein three bolts (6; 6a; 6b) are provided respectively on the left and right of the door (1).

5. The switchgear according to claim 1, further comprising:
a bolt (6, 6a, 6b) that is provided inside of the door (1), and on the further outer peripheral side of the door (1) than the sealing material (3, 3b); and a handle (22) that is provided outside of the door (1), and that is connected to the bolt (6, 6a, 6b),
wherein the bolt (6, 6a, 6b) is operated to fix the door (1) to the housing (4) by operating the handle (22).

6. The switchgear according to claim 5,
wherein two bolts (6; 6a; 6b) are provided respectively on the left and right of the door (1).

7. The switchgear according to any one of claims 1 to 6,
wherein the door (1) is fixed to the housing (4) with a knob screw (19) and a nut (20).

8. The switchgear according to any one of claims 1 to 6,
wherein the door (1) is fixed to the housing (4) with a bolt (6, 6a, 6b) and a nut (20).

## Patentansprüche

1. Schaltanlage, die umfasst:
ein Gehäuse (4), das ein Gerät im Inneren aufnimmt; und
eine nach außen sich öffnende Tür (1), die geöffnet und geschlossen werden kann und an dem Gehäuse (4) mit einem Scharnier (15) bereitgestellt ist,
wobei an der Tür (1) eine Struktur, die eine Platte (2a) und eine Platte (5a) mit einem keilförmigen Ende umfasst, bereitgestellt ist und ein Dichtungsmaterial (3a) aus einem elastischen Körper in die zwischen diesen Platten gebildeten Fuge eingefügt und darin befestigt ist,
wobei an dem Gehäuse (4) gegenüber der Struktur der Tür (1) eine ähnliche Struktur, die eine Platte (2b), eine Platte (5b) mit einem keilförmigen Ende und ein Dichtungsmaterial (3b) aus einem elastischen Körper, das dazwischen eingefügt und darin befestigt ist, umfasst, bereitgestellt ist,
**dadurch gekennzeichnet, dass**
dann, wenn die Tür (1) geschlossen ist, die jeweiligen keilförmigen Platten (5a) und (5b) gegen die Dichtungsmaterialien (3a) und (3b) gedrückt werden, um das Schaltanlage abzudichten.

2. Schaltanlage nach Anspruch 1,
wobei die Länge des ersten plattenförmigen Elements (2a) auf der Scharnierseite kürzer als die Länge des zweiten plattenförmigen Elements (5a) ist.

3. Schaltanlage nach Anspruch 1, die ferner umfasst:
einen Bolzen (6, 6a, 6b), der innerhalb der Tür (1) und auf der weiter mittleren Seite der Tür (1) als das Dichtungsmaterial (3, 3b) bereitgestellt ist; und einen Griff (22), der außerhalb der Tür (1) bereitgestellt ist und mit dem Bolzen (6, 6a, 6b) verbunden ist,
wobei der Bolzen (6, 6a, 6b) betätigt wird, um die Tür (1) an dem Gehäuse (4) zu befestigen, indem der Griff (22) betätigt wird.

4. Schaltanlage nach Anspruch 3,
wobei drei Bolzen (6; 6a; 6b) links bzw. rechts von der Tür (1) bereitgestellt sind.

5. Schaltanlage nach Anspruch 1, die ferner umfasst:
einen Bolzen (6, 6a, 6b), der innerhalb der Tür (1) und auf der weiter äußeren Umfangsseite der Tür (1) als das Dichtungsmaterial (3, 3b) bereitgestellt ist; und einen Griff (22), der außerhalb der Tür (1) bereitgestellt ist und mit dem Bolzen (6, 6a, 6b) verbunden ist,
wobei der Bolzen (6, 6a, 6b) betätigt wird, um die Tür (1) an dem Gehäuse (4) zu befestigen, indem der Griff (22) betätigt wird.

6. Schaltanlage nach Anspruch 5,
wobei zwei Bolzen (6; 6a; 6b) links bzw. rechts von der Tür (1) bereitgestellt sind.

7. Schaltanlage nach einem der Ansprüche 1 bis 6,
wobei die Tür (1) an dem Gehäuse (4) mit einer Griffschraube (19) und einer Mutter (20) befestigt ist.

8. Schaltanlage nach einem der Ansprüche 1 bis 6,
wobei die Tür (1) an dem Gehäuse (4) mit einem Bolzen (6, 6a, 6b) und einer Mutter (20) befestigt ist.

## Revendications

1. Appareillage de commutation comprenant :
un boîtier (4) qui loge un équipement à l'intérieur ; et
une porte d'ouverture vers l'extérieur (1) qui est prévue de manière à pouvoir être ouverte/fermée sur le boîtier (4) avec une charnière (15),
dans lequel une structure comprenant une plaque (2a) et une plaque (5a) ayant une extrémité en forme de coin est prévue sur la porte (1), et un matériau d'étanchéité fait d'un corps élastique (3a) est ménagé et fixé dans la rainure formée entre ces plaques,
dans lequel une structure similaire comprenant une plaque (2b), une plaque (5b) ayant une extrémité en forme de coin, et un matériau d'étanchéité (3b) fait d'un corps élastique ménagé et fixé entre celles-ci est prévu sur le boîtier (4) à l'opposé de la structure de la porte (1),
**caractérisé en ce que** :
quand la porte (1) est fermée, les plaques en forme de coin respectives (5a) et (5b) sont pressées contre les matériaux d'étanchéité (3a) et (3b) pour étancher l'appareillage de commutation.

2. Appareillage de commutation selon la revendication 1,
dans lequel la longueur du premier élément en forme de plaque (2a) sur le côté charnière est plus courte que la longueur du second élément en forme de plaque (5a).

3. Appareillage de commutation selon la revendication 1, comprenant en outre :
un boulon (6, 6a, 6b) qui est prévu à l'intérieur de la porte (1), et sur le côté central plus éloigné de la porte (1) que le matériau d'étanchéité (3, 3b) ; et
une poignée (22) qui est prévue à l'extérieur de la porte (1), et qui est connectée au boulon (6, 6a, 6b),
dans lequel le boulon (6, 6a, 6b) a pour fonction de fixer la porte (1) au boîtier (4) lors d'un fonctionnement de la poignée (22).

4. Appareillage de commutation selon la revendication 3,
dans lequel trois boulons (6, 6a, 6b) sont prévus respectivement sur la gauche et sur la droite de la porte (1).

5. Appareillage de commutation selon la revendication 1, comprenant en outre :
un boulon (6, 6a, 6b) qui est prévu à l'intérieur de la porte (1), et sur le côté périphérique extérieur plus éloigné de la porte (1) que le matériau d'étanchéité (3, 3b) ; et une poignée (22) qui est prévue à l'extérieur de la porte (1), et qui est connectée au boulon (6, 6a, 6b),
dans lequel le boulon (6, 6a, 6b) a pour fonction de fixer la porte (1) au boîtier (4) lors d'un fonctionnement de la poignée (22).

6. Appareillage de commutation selon la revendication 5,
dans lequel deux boulons (6, 6a, 6b) sont prévus respectivement sur la gauche et sur la droite de la porte (1).

7. Appareillage de commutation selon l'une quelconque des revendications 1 à 6,
dans lequel la porte (1) est fixée au boîtier (4) avec une vis à bouton (19) et un écrou (20).

8. Appareillage de commutation selon l'une quelconque des revendications 1 à 6,
dans lequel la porte (1) est fixée au boîtier (4) avec un boulon (6, 6a, 6b) et un écrou (20).
